# EUROPÄISCHE PATENTANMELDUNG

(11) **EP 3 779 621 A1**
(43) Veröffentlichungstag der Anmeldung: **17.02.2021**
(21) Anmeldenummer: 20184171.5
(22) Anmeldetag: 06.07.2020
(51) Int. Cl.: G05B 19/042, G05B 19/05, G05B 19/418

(54) **VERFAHREN UND SYSTEM ZUR HERSTELLUNG EINES SENSORS**

(30) Priorität: 13.08.2019 DE 102019121799
(71) Anmelder: SICK AG, 79183 Waldkirch (DE)
(72) Erfinder: Hofstätter, Daniel, 79312 Emmendingen (DE); Esslinger, Andreas, 79104 Freiburg (DE)

(57) **Zusammenfassung**

System (1) und Verfahren zur Herstellung eines Sensors (2) für eine Verarbeitungsmaschine/-anlage (8), wobei zugehörig zu dem Sensor (2) ein digitaler Zwillingsensor (9) vorhanden ist, wobei der digitale Zwillingsensor (9) in einer Datenbank (10) gespeichert wird, wobei der digitale Zwillingssensor (9) ein Datenmodell (11) des Sensors (2) bildet, wobei das Datenmodell (11) mindestens Datenbausteine (17) mit Daten für ein Sensorgehäuse (3), für eine Elektronik (4), für eine Steuer-und Auswerteeinheit (5), für ein primäres Sensorelement (6) und/oder für mechanischen Komponenten (7) des Sensors (2) aufweist, wobei der digitale Zwillingsensor (9) in ein Konstruktionsprogramm (13) für die Verarbeitungsmaschine/-anlage (8) geladen wird, wobei der digitale Zwillingsensor (9) in dem Konstruktionsprogramm (13) konfiguriert wird, wobei der digitale Zwillingsensor (9) an die Verarbeitungsmaschine/-anlage (8) angepasst wird und der angepasste digitale Zwillingsensor (9) als realer angepasster Sensor (2) hergestellt wird.

## Beschreibung

Die vorliegende Erfindung betrifft ein Verfahren zur Herstellung eines Sensors nach dem Oberbegriff von Anspruch 1 und ein System zur Herstellung eines Sensors nach dem Oberbegriff von Anspruch 8.

Sensoren wie beispielsweise Lichtschranken und Lichttaster kommen heutzutage in sehr großen Stückzahlen zum Einsatz und werden daher als Standardgeräte für ein breites Anwendungsfeld entwickelt und produziert.

Sensoren in Industrieanlagen haben jedoch viele unterschiedliche Aufgaben. Je nach Industriezweig sind die Anforderungen dieser Aufgaben an die Sensoren sehr speziell. Es ist also notwendig, die Sensoren an diese spezifischen Anforderungen anzupassen.

Für die oben erwähnten Anpassungen werden heutzutage Einstellmöglichkeiten dem Anwender zugänglich gemacht. Beispielsweise eine Einstellung eines Arbeitspunktes oder eine Einstellung, ob der Sensor hell- oder dunkelschaltend ist. Dies erfolgt in der Regel durch Tasten oder Drehknöpfe.

Eine andere Möglichkeit ist es, die Sensoren über Bussysteme, beispielsweise IO-Link und eine entsprechende Software zu parametrieren. Auf diese Weise können Anpassungen in der Sensorsoftware und der Sensorfirmware durchgeführt werden, oder beispielsweise ASIC-Parameter verändert werden, beispielsweise eine Anpassung einer Schalthysterese.

Neben der Sensorparametrierung muss häufig eine Kabellänge konfektioniert werden, um die Sensoren möglichst platzsparend in eine Anlage integrieren zu können.

In der Regel erfolgt die Parametrierung der Sensoren in der Anlage an jedem einzelnen Gerät durch einen Monteur. Bei einer Parametrierung über Bussysteme wie IO-Link wird ein Rechner zur Parametrierung benötigt. Dies ist bei einer großen Anzahl von eingesetzten Sensoren sehr zeitaufwändig.

Müssen dabei Kabellängen gekürzt werden, stellt dies eine Verschwendung an Ressourcen dar. Die Kabelstücke, um die die Sensorkabel gekürzt werden, müssen entsorgt werden und wurden nie bestimmungsgemäß eingesetzt.

Um möglichst viele Anwendungen bzw. Applikationen mit Standardsensoren bedienen zu können, liefern Sensorhersteller die Sensoren oft mit sehr langen Kabeln aus. Dies verschärft das oben genannte Problem. Die Alternative ist, unterschiedliche Kabellängen als Standardsensoren im Lager vorzuhalten, was jedoch zu hohen Lagerkosten führt.

Eine Aufgabe der Erfindung besteht darin, eine Herstellung des Sensors zu verbessern. Insbesondere soll eine Parametrierung und/oder Konfektionierung des Sensors während der Planung der Anlage erfolgen.

Die Aufgabe wird gemäß Anspruch 1 gelöst durch ein Verfahren zur Herstellung eines Sensors für eine Verarbeitungsmaschine/-anlage, wobei zugehörig zu dem Sensor ein digitaler Zwillingsensor vorhanden ist, wobei der digitale Zwillingsensor in einer Datenbank gespeichert wird, wobei der digitale Zwillingssensor ein Datenmodell des Sensors bildet, wobei das Datenmodell mindestens ein Datenbaustein mit Daten für ein Sensorgehäuse, für eine Elektronik, für eine Steuer-und Auswerteeinheit, für ein primäres Sensorelement und/oder für mechanischen Komponenten des Sensors aufweist, wobei der digitale Zwillingsensor in ein Konstruktionsprogramm für die Verarbeitungsmaschine/- anlage geladen wird, wobei der digitale Zwillingsensor in dem Konstruktionsprogramm konfiguriert wird, wobei der digitale Zwillingsensor an die Verarbeitungsmaschine/-anlage angepasst wird und der angepasste digitale Zwillingsensor als realer angepasster Sensor hergestellt wird.

Weiter wird die Aufgabe gemäß Anspruch 8 gelöst durch ein System zur Herstellung eines Sensors für eine Verarbeitungsmaschine/-anlage, wobei zugehörig zu dem Sensor ein digitaler Zwillingsensor vorhanden ist, wobei der digitale Zwillingsensor in einer Datenbank gespeichert ist, wobei der digitale Zwillingssensor ein Datenmodell des Sensors bildet, wobei das Datenmodell mindestens ein Datenbaustein mit Daten für ein Sensorgehäuse, für eine Elektronik, für eine Steuer-und Auswerteeinheit, für ein primäres Sensorelement und/oder für mechanischen Komponenten des Sensors aufweist, wobei der digitale Zwillingsensor in ein Konstruktionsprogramm für die Verarbeitungsmaschine/- anlage ladbar ist, wobei der digitale Zwillingsensor in dem Konstruktionsprogramm konfigurierbar ist, wobei der digitale Zwillingsensor an die Verarbeitungsmaschine/-anlage angepasst ist und der angepasste digitale Zwillingsensor als realer angepasster Sensor hergestellt ist.

Die zu herstellenden Sensoren werden einem Anlagendesigner in Form des digitalen Zwillingssensors in dem Konstruktionsprogramm zur Verfügung gestellt. Bei dem Konstruktionsprogramm handelt es sich um eine domainspezifische Software, wie beispielsweise SolidWorks, Siemens NX Designer oder ähnliche Software.

Der digitale Zwillingsensor ermöglicht alle Einstellmöglichkeiten des Sensors. Dadurch können die Einstellungen bereits im Anlagendesign virtuell durchgeführt werden.

Gemäß der Erfindung können beispielsweise Konfigurations- und bestimmte Hardwareparameter automatisch in dem Konstruktionsprogramm erfasst und in einen Produktionsparameter im digitalen Zwilling umgewandelt werden.

Beispielsweise wird in dem Konstruktionsprogramm eine Distanz entlang der optischen Achse eines digitalen Zwillingssensors zu einem zu detektierenden Objekt erfasst und im digitalen Zwilling in einen Teachwert bzw. Einlernwert umgewandelt. Ist die Distanz beispielsweise zu groß für den verwendeten digitalen Zwillingssensor erscheint eine Meldung, welche die Verwendung eines anderen Sensors empfiehlt und bietet beispielsweise eine Auswahl der zugehörigen digitalen Zwillingssensoren an.

Weiter kann beispielsweise eine notwendige Kabellänge im Konstruktionsprogramm automatisch ermittelt werden, sobald der Sensor positioniert ist und die Position für die Sensoranschlüsse bekannt ist. Die notwendige Kabellänge der Anschlusskabel wird in dem digitalen Zwilling vermerkt.

Bei dem Konstruktionsprogramm kann es sich auch um ein Programm handeln, in dem der digitale Zwillingssensor anpassbar ist, wobei das Konstruktionsprogramm eine Exportfunktion aufweist um den geänderten digitalen Zwillingssensor einem anderen Konstruktionsprogramm zur Verfügung zu stellen.

Gemäß der Erfindung ist eine schnellere Installation der Sensoren in der Anlage möglich. Die Sensoren sind nach der Installation sofort betriebsbereit und bereits individuell eingestellt. In Ausnahmefällen benötigen die Sensoren noch beispielsweise eine Feineinstellung. Beispielsweise erfolgt noch eine Feineinstellung des Schaltpunktes, da der grobe Schaltpunkt schon bei der Produktion des Sensors eingestellt wurde. Wurde beispielsweise der digitale Zwillingssensor mit der Feineinstellung aus der Verarbeitungsmaschine/-anlage aktualisiert, ist beim Sensortausch unter Umständen keine Parametrierung mehr notwendig.

Gemäß der Erfindung erfolgt eine Abfallvermeidung und eine Ressourcenschonung. Werden beispielsweise Kabellängen maßgeschneidert, entfällt der Abfall von Kabeln, die bei der Montage gekürzt werden würden.

In Weiterbildung der Erfindung weist das Datenmodell Konstruktionsdaten, Funktionsdaten und/oder Designdaten des digitalen Zwillingsensors auf. Die Konstruktionsdaten beinhalten mindestens die verwendeten Bauteile bzw. Baugruppen, deren Abmessungen und deren Materialien. Die Funktionsdaten enthalten mindestens die Funktion der verwendeten Bauteile bzw. Baugruppen sowie Datenblattwerte zur Spezifikation des Bauteils bzw. der Baugruppe. Designdaten enthalten beispielsweise Designregeln zum Sensoraufbau, wie beispielsweise optische Regeln.

In Weiterbildung der Erfindung beinhaltet das Datenmodell mindestens produktionsspezifische Informationen des digitalen Zwillingsensors nämlich Abgleichwerte und/oder Justagewerte. Die Abgleichwerte und/oder Justagewerte bilden eine finale Einstellung des Sensors für den konkreten Sensor oder beispielsweise einen konkreten Einsatzzweck. So kann beispielsweise eine Empfindlichkeit des Sensors eingestellt sein oder beispielsweise optische Achsen des Sensors justiert sein.

In Weiterbildung der Erfindung sind die Daten Konfigurationsdaten, Parametrierdaten und/oder Kennzahlen des digitalen Zwillingsensors. Parametrierdaten oder Konfigurationsdaten sind beispielsweise eine eingestellte Reichweite, eine Anzahl von Schutzfeldern, ein Detektionsfeld usw. des Sensors.

In Weiterbildung der Erfindung sind der Sensor und der digitale Zwillingssensor über eine Schnittstelle miteinander verbunden, wobei über die Schnittstelle mindestens Daten von dem Sensor an den digitalen Zwillingssensor übertragbar sind.

Abweichungen zwischen dem digitalen Zwillingsensor und dem realen Sensor können in dem realen Sensor oder in dem digitalen Zwillingssensor dadurch festgestellt werden, dass ein Vergleich zwischen dem realen Sensor und dem digitalen Zwillingssensor über Schnittstelle durchgeführt wird.

Bei der Schnittstelle kann es sich beispielsweise um eine Ethernet-Schnittstelle bzw. eine Ethernet-Verbindung handeln. Jedoch sind auch andere Schnittstellen möglich. Beispielsweise kann es sich bei der Schnittstelle um ein Bussystem handeln. Optional ist die Schnittstelle als sichere, insbesondere fehlersichere Schnittstelle ausgebildet. Insbesondere kann es sich auch um ein sicheres Bussystem handeln. Bei der Schnittstelle kann es sich auch um eine Funkschnittstelle handeln. Bei der Schnittstelle handelt es sich um eine Ferndatenschnittstelle, da der Sensor und der digitale Zwillingssensor räumlich getrennt voneinander sind. So ist eine Datenbank mit dem digitalen Zwillingssensor meist in einem vom Sensor entfernten Rechenzentrum abgelegt.

In Weiterbildung der Erfindung weist der Sensor und der digitale Zwillingssensor jeweils eine eindeutige Identifikationsnummer auf, welche miteinander verknüpft sind, um den digitalen Zwillingsensor dem Sensor und/oder den Sensor dem digitalen Zwillingssensor eindeutig zuzuordnen.

Nach der Anpassung des digitalen Zwillingsensors in dem Konstruktionsprogramm bzw. in der Anlagendesignsoftware erhält jeder digitale Zwillingssensor eine eindeutige Identifikationsnummer in der Verarbeitungsmaschine/-anlage des Anwenders bzw. Kunden und eine eindeutige Identifikationsnummer in der Sensorproduktion. Mit dieser eindeutigen Identifikationsnummer wird der digitale Zwillingssensor als Produktionsauftrag an die Sensorproduktion gesandt.

In der Sensorproduktion wird der Sensor mit den entsprechenden Kabellängen und Parametrierungen wie beim digitalen Zwilling hergestellt. Der neu produzierte Sensor erhält die gleiche Identifikationsnummer wie sein digitaler Zwilling. Auf diese Weise ist sichergestellt, dass der Sensor die gleichen Eigenschaften aufweist wie sein digitaler Zwillingssensor. Weiter ist sichergestellt, dass der Sensor an die gleiche Position und in der gleichen Orientierung in der Anlage montiert wird wie sein digitaler Zwillingssensor.

Zugehörig zu der Verarbeitungsmaschine/-anlage wird eine Kopie des digitalen Zwillingssensors in einem Verwaltungssystem gespeichert. Somit kann im Ersatzteilgeschäft jederzeit ein neuer realer Sensor produziert werden. Anhand seiner eindeutigen Identifikationsnummer ist er immer identifizierbar.

Diese Kopie des digitalen Zwillingssensors kann bei Bedarf durch den Kunden aktualisiert werden, wenn bei der Inbetriebnahme des Sensors eine Nachjustierung der Parametrierung erfolgt ist.

In Weiterbildung der Erfindung werden während einer Betriebsphase des Sensors die Daten des Sensors kontinuierlich oder in festen Intervallen an den digitalen Zwillingssensor übertragen.

Nach einer Neuinstallation des Sensors können die Daten beispielsweise kontinuierlich zwischen Sensor und digitalem Zwillingsensor übertragen werden, da der Sensor in dieser Zeit erstmals Umgebungsbedingungen ausgesetzt ist und eine Beeinflussung des Sensors mit einer hohen Wahrscheinlichkeit eintritt. Damit wird der digitale Zwillingssensor an den realen Sensor angepasst.

Im laufenden Betrieb und je nach Sensor bzw. je nach Einsatzort kann eine Übertragung in festen Intervallen mit verschiedenen Abständen von z. B. Sekunden, Minuten, Stunden, Tagen, Wochen, Monaten oder Jahren erfolgen.

Je drastischer und/oder häufiger die Veränderungen von Umgebungsbedingungen ist, desto häufiger kann eine zyklische Übertragung von Daten erfolgen.

Bei den Sensoren kann es sich um Lichtschranken, Lichttaster, Lichtvorhänge, Lichtgitter, Kameras, 3D-Kameras, Barcodeleser, Laserscanner, induktive Sensoren, magnetische Sensoren, kapazitive Sensoren oder ähnliches handeln.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

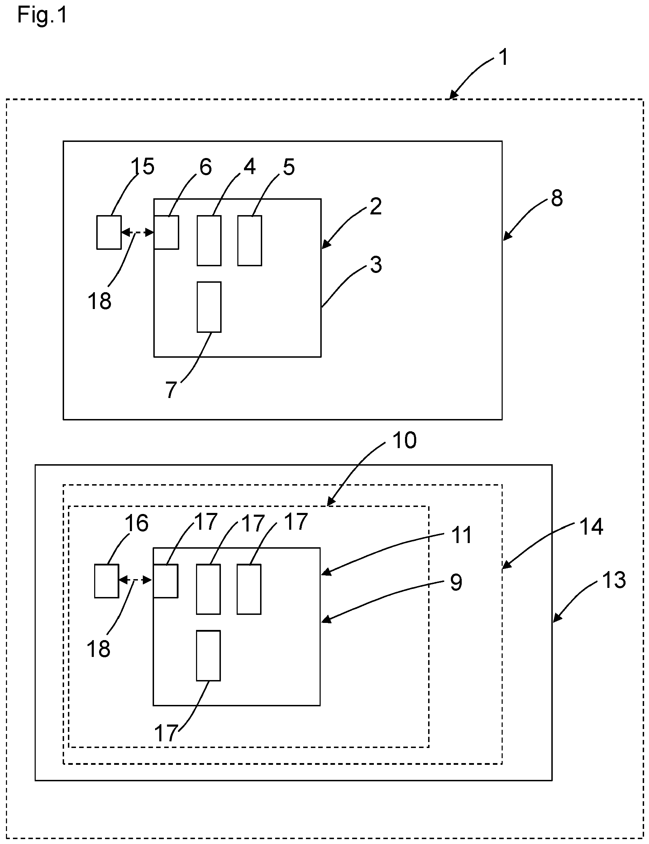

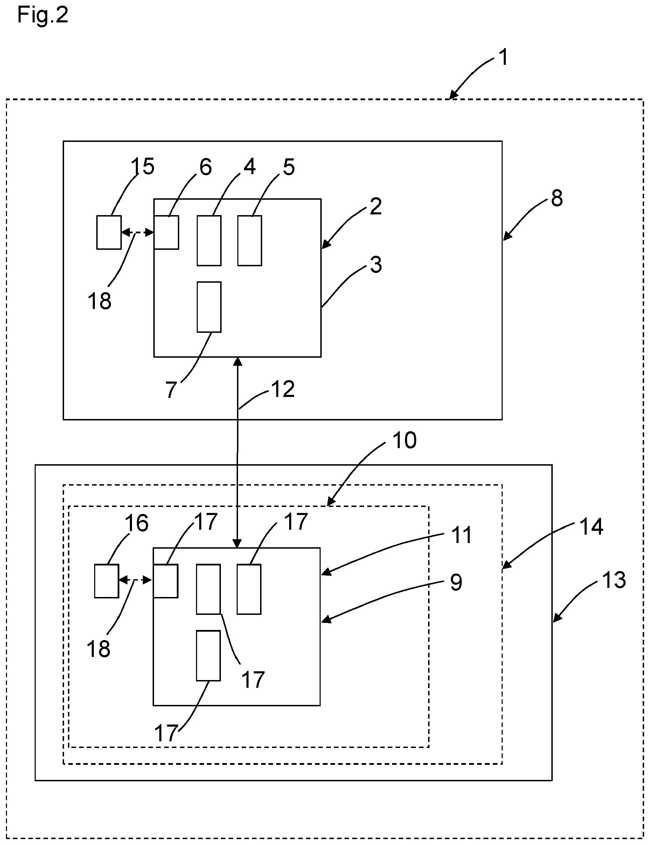

- Figur 1 und Figur 2: jeweils ein erfindungsgemäßes System bzw. Verfahren zur Herstellung eines Sensors.

In den nachfolgenden Figuren sind identische Teile mit identischen Bezugszeichen versehen.

Figur 1 zeigt ein System 1 bzw. ein Verfahren zur Herstellung eines Sensors 2 für eine Verarbeitungsmaschine/-anlage 8, wobei zugehörig zu dem Sensor 2 ein digitaler Zwillingsensor 9 vorhanden ist, wobei der digitale Zwillingsensor 9 in einer Datenbank 10 gespeichert ist, wobei der digitale Zwillingssensor 9 ein Datenmodell 11 des Sensors 2 bildet, wobei das Datenmodell 11 mindestens jeweils ein Datenbaustein mit Daten 17 für ein Sensorgehäuse 3, für eine Elektronik 4, für eine Steuer-und Auswerteeinheit 5, für ein primäres Sensorelement 6 und/oder für mechanischen Komponenten 7 des Sensors 2 aufweist, wobei der digitale Zwillingsensor 9 in ein Konstruktionsprogramm 13 für die Verarbeitungsmaschine/-anlage 8 ladbar ist, wobei der digitale Zwillingsensor 9 in dem Konstruktionsprogramm 13 konfigurierbar ist, wobei der digitale Zwillingsensor 9 an die Verarbeitungsmaschine/-anlage 8 angepasst ist und der angepasste digitale Zwillingsensor 9 als realer angepasster Sensor 2 hergestellt ist.

Die zu herstellenden Sensoren 2 werden einem Anlagendesigner in Form des digitalen Zwillingssensors 9 in dem Konstruktionsprogramm 13 zur Verfügung gestellt. Bei dem Konstruktionsprogramm 13 handelt es sich um eine domainspezifische Software, wie beispielsweise SolidWorks, Siemens NX Designer oder ähnliche Software. In dem Konstruktionsprogramm 13 ist ein digitales Modell 14 der Verarbeitungsmaschine/-anlage vorhanden. Weiter sind beispielsweise auch ein digitale Modelle 16 von Objekten 15 vorhanden.

Der digitale Zwillingsensor 9 ermöglicht alle Einstellmöglichkeiten des Sensors 2.

Gemäß Figur 1 können beispielsweise Konfigurations- und bestimmte Hardwareparameter automatisch in dem Konstruktionsprogramm 13 erfasst und in einen Produktionsparameter im digitalen Zwillingssensor 9 umgewandelt.

Beispielsweise wird in dem Konstruktionsprogramm 13 eine Distanz 18 entlang der optischen Achse eines digitalen Zwillingssensors 9 zu einem digitalen Modell 16 eines zu detektierenden Objekts 15 erfasst und im digitalen Zwillingssensor 9 in einen Teachwert bzw. Einlernwert umgewandelt. Ist die Distanz 18 beispielsweise zu groß für den verwendeten digitalen Zwillingssensor 9 erscheint eine Meldung, welche die Verwendung eines anderen Sensors empfiehlt und bietet beispielsweise eine Auswahl der zugehörigen digitalen Zwillingssensoren 9 an.

Weiter kann beispielsweise eine notwendige Kabellänge im Konstruktionsprogramm 13 automatisch ermittelt werden, sobald der digitale Zwillingssensor 9 positioniert ist und die Position für die Sensoranschlüsse bekannt ist. Die notwendige Kabellänge der Anschlusskabel wird in dem digitalen Zwillingssensor 9 vermerkt.

Bei dem Konstruktionsprogramm 13 kann es sich auch um ein Programm handeln, in dem der digitale Zwillingssensor 9 anpassbar ist, wobei das Konstruktionsprogramm 13 eine Exportfunktion aufweist um den geänderten digitalen Zwillingssensor 9 einem anderen Konstruktionsprogramm 13 zur Verfügung zu stellen.

Gemäß Figur 1 weist das Datenmodell 11 Konstruktionsdaten, Funktionsdaten und/oder Designdaten des digitalen Zwillingsensors 9 auf.

Gemäß Figur 1 beinhaltet das Datenmodell 11 mindestens produktionsspezifische Informationen des digitalen Zwillingsensors 9, nämlich Abgleichwerte und/oder Justagewerte. So kann beispielsweise eine Empfindlichkeit des digitalen Zwillingssensors 9 bzw. des Sensors 2 eingestellt sein oder beispielsweise optische Achsen des digitalen Zwillingssensors 9 bzw. des Sensors 2 justiert sein.

Gemäß Figur 1 sind die Daten Konfigurationsdaten, Parametrierdaten und/oder Kennzahlen des digitalen Zwillingsensors 9. Parametrierdaten oder Konfigurationsdaten sind beispielsweise eine eingestellte Reichweite, eine Anzahl von Schutzfeldern, ein Detektionsfeld usw. des Sensors 2 bzw. des digitalen Zwillingssensors 9.

Gemäß Figur 2 sind der Sensor 2 und der digitale Zwillingssensor 9 über eine Schnittstelle 12 miteinander verbunden, wobei über die Schnittstelle 12 mindestens Daten von dem Sensor 2 an den digitalen Zwillingssensor 9 übertragbar sind.

Abweichungen zwischen dem digitalen Zwillingsensor 9 und dem realen Sensor 2 können in dem realen Sensor 2 oder in dem digitalen Zwillingssensor 9 dadurch festgestellt werden, dass ein Vergleich zwischen dem realen Sensor 2 und dem digitalen Zwillingssensor 9 über Schnittstelle 12 durchgeführt wird.

Gemäß einer nicht dargestellten Ausführungsform weist der Sensor und der digitale Zwillingssensor jeweils eine eindeutige Identifikationsnummer auf, welche miteinander verknüpft sind, um den digitalen Zwillingsensor dem Sensor und/oder den Sensor dem digitalen Zwillingssensor eindeutig zuzuordnen.

Nach der Anpassung des digitalen Zwillingsensors in dem Konstruktionsprogramm bzw. in der Anlagendesignsoftware erhält jeder digitale Zwillingssensor eine eindeutige Identifikationsnummer in der Verarbeitungsmaschine/-anlage des Anwenders bzw. Kunden und eine eindeutige Identifikationsnummer in der Sensorproduktion. Mit dieser eindeutigen Identifikationsnummer wird der digitale Zwillingssensor als Produktionsauftrag an die Sensorproduktion gesandt.

In der Sensorproduktion wird der Sensor mit den entsprechenden Kabellängen und Parametrierungen wie beim digitalen Zwilling hergestellt. Der neu produzierte Sensor erhält die gleiche Identifikationsnummer wie sein digitaler Zwilling.

Gemäß Figur 2 werden während einer Betriebsphase des Sensors 2 die Daten des Sensors 2 kontinuierlich oder in festen Intervallen an den digitalen Zwillingssensor 9 übertragen.

Nach einer Neuinstallation des Sensors 2 können die Daten beispielsweise kontinuierlich zwischen Sensor 2 und digitalem Zwillingsensor 9 übertragen werden, da der Sensor 2 in dieser Zeit erstmals Umgebungsbedingungen ausgesetzt ist und eine Beeinflussung des Sensors 2 mit einer hohen Wahrscheinlichkeit eintritt. Damit wird der digitale Zwillingssensor 9 an den realen Sensor 2 angepasst.

Bei den Sensoren 2 gemäß Figur 1 bis 2 kann es sich um Lichtschranken, Lichttaster, Lichtvorhänge, Lichtgitter, Kameras, 3D-Kameras, Barcodeleser, Laserscanner, induktive Sensoren, magnetische Sensoren, kapazitive Sensoren oder Ahnliches handeln.

### Bezugszeichen:

- 1: System
- 2: Sensor
- 3: Sensorgehäuse
- 4: Elektronik
- 5: Steuer- und Auswerteeinheit
- 6: primäres Sensorelement
- 7: mechanische Komponenten
- 8: Verarbeitungsmaschine/anlage
- 9: digitaler Zwillingssensor
- 10: Datenbank
- 11: Datenmodell
- 12: Schnittstelle
- 13: Konstruktionsprogramm
- 14: digitales Modell der Verarbeitungsmaschine/-anlage
- 15: Objekt
- 16: digitales Modell des Objektes
- 17: Datenbausteine
- 18: Distanz

## Patentansprüche

1. Verfahren zur Herstellung eines Sensors (2) für eine Verarbeitungsmaschine/- anlage (8),
wobei zugehörig zu dem Sensor (2) ein digitaler Zwillingsensor (9) vorhanden ist,
wobei der digitale Zwillingsensor (9) in einer Datenbank (10) gespeichert wird, wobei der digitale Zwillingssensor (9) ein Datenmodell (11) des Sensors (2) bildet,
wobei das Datenmodell (11) mindestens ein Datenbaustein (17) mit Daten für ein Sensorgehäuse (3), für eine Elektronik (4), für eine Steuer-und Auswerteeinheit (5), für ein primäres Sensorelement (6) und/oder für mechanischen Komponenten (7) des Sensors (2) aufweist,
wobei der digitale Zwillingsensor (9) in ein Konstruktionsprogramm (13) für die Verarbeitungsmaschine/-anlage (8) geladen wird,
wobei der digitale Zwillingsensor (9) in dem Konstruktionsprogramm (13) konfiguriert wird,
**dadurch gekennzeichnet, dass**
der digitale Zwillingsensor (9) an die Verarbeitungsmaschine/-anlage (8) angepasst wird und der
angepasste digitale Zwillingsensor (9) als realer angepasster Sensor (2) hergestellt wird.

2. Verfahren nach Anspruch 1, **dadurch gekennzeichnet, dass** das Datenmodell (11) Konstruktionsdaten, Funktionsdaten und/oder Designdaten des digitalen Zwillingsensors (9) aufweist.

3. Verfahren nach mindestens einem der vorhergehenden Ansprüche, **dadurch gekennzeichnet, dass** das Datenmodell (11) mindestens produktionsspezifische Informationen des digitalen Zwillingsensors (9) nämlich Abgleichwerte und/oder Justagewerte beinhaltet.

4. Verfahren nach mindestens einem der vorhergehenden Ansprüche, **dadurch gekennzeichnet, dass** Daten des Datenmodells Parametrierdaten und/oder Kennzahlen des digitalen Zwillingsensors (9) sind.

5. Verfahren nach mindestens einem der vorhergehenden Ansprüche, **dadurch gekennzeichnet, dass** der Sensor (2) und der digitale Zwillingssensor (9) über eine Schnittstelle (12) miteinander verbunden sind, wobei über die Schnittstelle (12) mindestens Daten von dem Sensor (2) an den digitalen Zwillingssensor (9) übertragbar sind.

6. Verfahren nach mindestens einem der vorhergehenden Ansprüche, **dadurch gekennzeichnet, dass** der Sensor (2) und der digitale Zwillingssensor (9) jeweils eine eindeutige Identifikationsnummer aufweisen, welche miteinander verknüpft sind, um den digitalen Zwillingsensor (9) dem Sensor (2) und/oder den Sensor (2) dem digitalen Zwillingssensor (9) eindeutig zuzuordnen.

7. Verfahren nach mindestens einem der vorhergehenden Ansprüche, **dadurch gekennzeichnet, dass** während einer Betriebsphase des Sensors (2) die Daten des Sensors (2) kontinuierlich oder in festen Intervallen an den digitalen Zwillingssensor (9) übertragen werden.

8. System (1) zur Herstellung eines Sensors (2) für eine Verarbeitungsmaschine/- anlage (8),
wobei zugehörig zu dem Sensor (2) ein digitaler Zwillingsensor (9) vorhanden ist,
wobei der digitale Zwillingsensor (9) in einer Datenbank (10) gespeichert ist, wobei der digitale Zwillingssensor (9) ein Datenmodell (11) des Sensors (2) bildet,
wobei das Datenmodell (11) mindesten ein Datenbaustein (17) mit Daten für ein Sensorgehäuse (3), für eine Elektronik (4), für eine Steuer-und Auswerteeinheit (5), für ein primäres Sensorelement (6) und/oder für mechanischen Komponenten (7) des Sensors (2) aufweist,
wobei der digitale Zwillingsensor (9) in ein Konstruktionsprogramm (13) für die Verarbeitungsmaschine-/anlage ladbar ist,
wobei der digitale Zwillingsensor (9) in dem Konstruktionsprogramm (13) konfigurierbar ist,
**dadurch gekennzeichnet, dass**
der digitale Zwillingsensor (9) an die Verarbeitungsmaschine/-anlage (8) angepasst ist und der
angepasste digitale Zwillingsensor (9) als realer angepasster Sensor (2) hergestellt ist.
